# EUROPÄISCHE PATENTANMELDUNG

(11) **EP 0 800 062 A2**
(43) Veröffentlichungstag der Anmeldung: **08.10.1997**
(21) Anmeldenummer: 97103692.6
(22) Anmeldetag: 06.03.1997
(51) Int. Cl.: G01F 1/66

(54) **Vorrichtung zur Messung der Strömungsgeschwindigkeit eines Fluides**

(30) Priorität: 04.04.1996 CH 876/96
(71) Anmelder: Georg Fischer Rohrleitungssysteme AG, CH-8201 Schaffhausen (CH)
(72) Erfinder: Schalk, Adelbert, 79793 Wutöschingen-Horheim (DE)
(74) Vertreter: Szilagyi, Marianne

(57) **Zusammenfassung**

Eine Vorrichtung zur Messung der Strömungsgeschwindigkeit eines Fluides mit Ultraschall weist ein Messrohr (12) mit im Bereich seiner Enden angeordneten Ultraschallwandlern (26) sowie koaxial zueinander angeordneten Anschlussstutzen (16) für den Zu- und Abfluss des Fluides auf. Das Messrohr (12) ist koaxial zu den Anschlussstutzen (16) angeordnet und die Ultraschallwandler (26) sind zwischen Messrohr und Anschlussstutzen positioniert. Mit dieser Massnahme kann die wirksame Länge (1) der Ultraschallmessstrecke bei vorgegebener Einbaulänge (L) vergrössert werden.

## Beschreibung

Die Erfindung betrifft eine Vorrichtung zur Messung der Strömungsgeschwindigkeit eines Fluides mit Ultraschall, mit einem Messrohr und im Bereich der Enden des Messrohres angeordneten Ultraschallwandlern sowie koaxial zueinander angeordneten Anschlussstutzen für den Zu- und Abfluss des Fluides.

Zur Bestimmung der Strömungsgeschwindigkeit eines fluiden Mediums, insbesondere von Flüssigkeiten, ist es bekannt, durch ein sogenanntes Messrohr Ultraschallwellenzüge gleichzeitig von beiden Stirnseiten des Rohres in Strömungsrichtung und entgegengesetzt dazu durch die im Messrohr fliessende Flüssigkeit zu senden. Aufgrund der Flüssigkeitsströmung tritt eine Laufzeitdifferenz zwischen den Schallsignalen auf, die proportional zur mittleren Strömungsgeschwindigkeit ist. Da die Laufzeitdifferenz linear mit der Messrohrlänge ansteigt, ist ein möglichst langes Messrohr wünschenswert. Andererseits ist jedoch die maximale Baulänge solcher Durchflussmesser aufgrund gegebener Einbauvorschriften vorgegeben.

Zur Vergrösserung der wirksamen Länge des Messrohrs bei vorgegebener maximaler Baulänge ist es aus der DE-A-4415889 bekannt, das Messrohr gegenüber der Verbindungsachse der Anschlussstutzen geneigt anzuordnen. Diese Massnahme führt jedoch zu einer ausladenden Konstruktion und benötigt demzufolge einen grossen Einbauraum. Durch den bezüglich des Strömungsprofils asymmetrischen Aufbau mit zum Teil scharfen Abrisskanten ist zusätzlich die maximale Durchflussgeschwindigkeit infolge auftretender Kavitation begrenzt.

Der Erfindung liegt daher die Aufgabe zugrunde, eine Vorrichtung der eingangs genannten Art so auszugestalten, dass bei vorgegebener maximaler Baulänge eine grössere wirksame Länge der Ultraschallmessstrecke möglich ist, ohne dass hierzu ein unverhältnismässig grosser Einbauraum benötigt wird. Zudem soll der Durchflussmesser kostengünstig in der Herstellung sein und eine einfache Installation in vorhandenen Rohrleitungssystemen ermöglichen.

Erfindungsgemäss wird diese Aufgabe dadurch gelöst, dass das Messrohr koaxial zu den Anschlussstutzen angeordnet ist und die Ultraschallwandler zwischen Messrohr und Anschlussstutzen positioniert sind.

Bei einer zweckmässigen Ausführungsform der erfindungsgemässen Vorrichtung sind die Ultraschallwandler in einer gegenüber Messrohr und Anschlussstutzen erweiterten Vorkammer innerhalb eines Gehäuses angeordnet. Das Gehäuse kann hierbei auf seiner dem Anschlussstutzen zugewandten Seite mit einem vorzugsweise abschraubbaren Strömungskörper verschlossen sein. Dieser Strömungsteiler ist bevorzugt über Haltestege in der Gehäuse- oder Rohrwandung verankert, wobei durch die Formgebung der Haltestege eine optimale Beeinflussung der Strömung, z.B. durch überlagerten Drall, möglich wird. Der abschraubbare Strömungskörper ermöglichst den Zugang zum Ultraschallwandler, so dass eine Wartung vom Anschlussstutzen her erfolgen kann.

Bei einer besonders bevorzugten Ausführungsform der erfindungsgemässen Vorrichtung ist das Messrohr Teil eines Zentralteils und jeder Anschlussstutzen Teil eines mit dem Zentralteil zu verbindenden Endstücks, wobei die Haltestege der Gehäuse in entsprechende Ausnehmungen am Zentral- und an den Endteilen eingelegt und nach dem Zusammenbau in diesen gehalten sind. Zentralteil und Endteile können je nach Anwendungsbereich aus Metall oder aus Kunststoff gefertigt sein. Ebenso richtet sich die Materialwahl für das Gehäuse und den Strömungskörper nach den Eigenschaften der in den Rohrleitungssystemen zu transportierenden Fluiden.

Bei einer Kunststoffausführung der Vorrichtung können die Anschlussleitungen zum Ultraschallwandler direkt in den Haltesteg des Gehäuses eingespritzt werden.

Als Vollkunststoff-Ausführung eignet sich die erfindungsgemässe Vorrichtung für den Einsatz in sämtlichen flüssigen Medien, gegen die der eingesetzte Kunststoff beständig ist. Geeignete Kunststoffe sind beispielsweise PE, PVC, PP, PVDF sowie weitere für Rohrleitungssysteme eingesetzte Kunststoffe.

Der erfindungsgemässe Durchflussmesser ermöglicht eine einfache Installation in vorhandene Rohrleitungssysteme. Gegenüber bekannten Systemen weist der Durchflussmesser einen deutlich vergrösserten Messbereich auf, d.h. Kavitation tritt erst bei höheren Geschwindigkeiten auf. Ein weiterer Vorteil liegt darin, dass der Durchflussmesser nur zu einem kleinen Druckverlust führt und bei minimaler Einbaulänge einen Einbauraum benötigt, der etwa dem zweifachen Rohraussendurchmesser entspricht. Durch das Fehlen von Hinterschneidungen und Toträumen ist der erfindungsgemässe Durchflussmesser auch für hochreine Medien geeignet.

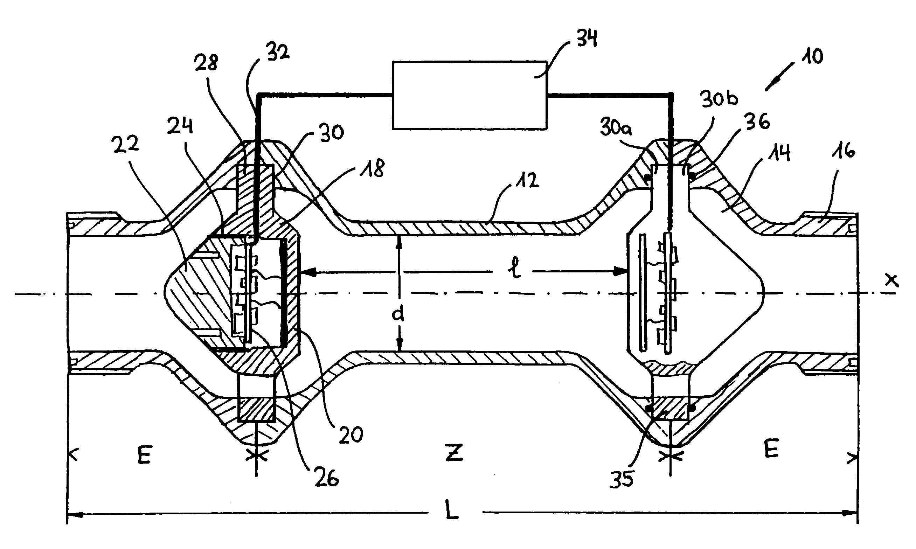

Weitere Vorteile, Merkmale und Einzelheiten der Erfindung ergeben sich aus der nachfolgenden Beschreibung eines bevorzugten Ausführungsbeispiels sowie anhand der Zeichnung; diese zeigt schemtisch in ihrer einzigen Figur einen Längsschnitt durch einen Ultraschall-Durchflussmesser.

Ein Ultraschall-Durchflussmesser 10 zur Bestimmung der Geschwindigkeit bzw. des Massedurchflusses eines Fluides weist ein zentrales Messrohr 12 auf, das sich beidseitig zu je einer Vorkammer 14 erweitert. Die sich anschliessend wieder verjüngenden Vorkammern 14 münden in Anschlussstutzen 16 für den Einbau des Ultraschall-Durchflussmessers 10 in ein in der Zeichnung nicht wiedergegebenes Rohrleitungssystem. Die Anschlussstutzen 16 sind koaxial zum Messrohr 12 angeordnet und weisen denselben Innendurchmesser d auf. Die gemeinsame Rohrachse x definiert die Durchflussrichtung.

In jeder Vorkammer 14 ist ein Gehäuse 18 mit einer gegen die Oeffnung des Messrohres 12 gerichteten Schallwand 20 angeordnet. Die dem Anschlussstutzen 16 zugewandte Seite des Gehäuses 18 ist mit einem kegelförmigen Strömungskörper 22 verschlossen, der über ein Gewinde 24 mit dem Gehäuse 18 verschraubbar ist. Das zusammen mit dem kegelförmigen Strömungskörper 22 einen Strömungsteiler bildende Gehäuse 18 dient der Aufnahme eines Ultraschallwandlers 26.

Die Befestigung des Gehäuses 18 innerhalb der Vorkammer 14 erfolgt über angeformte Haltestege 28, die in entsprechende Nuten 30 in der Gehäusewandung eingreifen. Zum Ultraschallwandler 26 führende Anschlussleitungen 32 sind durch die Haltestege 28 hindurchgeführt und ausserhalb des Durchflussmessers 10 mit einer Elektronikeinheit 34 verbunden.

Die am Gehäuse 18 angeformten Haltestege 28 können ebenso mit einem umlaufenden Ring 35 verbunden sein welcher von dem Zentralteil Z und den Endteilen E gehalten wird.

Der Durchflussmesser 10 besteht aus einem das Messrohr 12 sowie einen Teil der Vorkammer 14 umfassendes Zentralteil Z, an welches ein zweiter Teil der Vorkammer 14 mit integriertem Anschlussstutzen 16 beidseits als Endteile E anschliessen. Hierbei weisen die beiden Teile der Vorkammer 14 einander gegenüberstehende Ausnehmungen 30a, b auf, in die die Haltestege 28 des Gehäuses 18 beim Zusammenbau eingelegt werden und die nach erfolgtem Zusammenbau die Nuten 30 bilden.

Je nach eingesetztem Werkstoff für den Durchflussmesser 10 ist das Zentralteil Z mit den beiden Endteilen verschweisst, verklebt, verschraubt oder auf eine andere geeignete Weise verbunden. Je nach Verbindungsart können die Haltestege 28 in den Nuten über Ringdichtungen 36 abgedichtet sein. Die Wartung des innerhalb des Gehäuses 18 angeordneten Ultraschallwandlers 26 ist von den Anschlussstutzen 16 her möglich, wobei die Oeffnung des Gehäuses 18 auf einfache Weise durch Abschrauben des kegelförmigen Strömungskörpers 22 erfolgt.

Aus der Zeichnung ist ohne weiteres das günstige Verhältnis zwischen wirksamer Länge 1 der Ultraschall-Messstrecke zur gesamten Einbaulänge L des Durchflussmessers 10 erkennbar.

## Patentansprüche

1. Vorrichtung zur Messung der Strömungsgeschwindigkeit eines Fluides mit Ultraschall, mit einem Messrohr (12) und im Bereich der Enden des Messrohres angeordneten Ultraschallwandlern (26) sowie koaxial zueinander angeordneten Anschlussstutzen (16) für den Zu- und Abfluss des Fluides, dadurch gekennzeichnet, dass das Messrohr (12) koaxial zu den Anschlussstutzen (16) angeordnet ist und die Ultraschallwandler (26) zwischen Messrohr und Anschlussstutzen positioniert sind.

2. Vorrichtung nach Anspruch 1, dadurch gekennzeichnet, dass die Ultraschallwandler (26) in einer gegenüber Messrohr (12) und Anschlussstutzen (16) erweiterten Vorkammer (14) angeordnet sind.

3. Vorrichtung nach Anspruch 1 oder 2, dadurch gekennzeichnet, dass die Ultraschallwandler (26) in einem Gehäuse (18) angeordnet sind.

4. Vorrichtung nach Anspruch 3, dadurch gekennzeichnet, dass das Gehäuse (18) auf seiner dem Anschlussstutzen (16) zugewandten Seite mit einem Strömungskörper (22) verschlossen ist.

5. Vorrichtung nach Anspruch 4, dadurch gekennzeichnet, dass das Gehäuse (18) mit dem Strömungskörper (22) verschweisst ist.

6. Vorrichtung nach Anspruch 4, dadurch gekennzeichnet, dass das Gehäuse (18) aus seiner, dem Anschlussstutzen (16) zugewandten Seite, mit einem vorzugsweise abschraubbaren Strömungskörper (22) verschlossen ist.

7. Vorrichtung nach einem der Ansprüche 1 bis 6, dadurch gekennzeichnet, dass das Gehäuse (18) über Haltestege (28) in der Gehäuse- oder Rohrwandung verankert ist.

8. Vorrichtung nach Anspruch 7, dadurch gekennzeichnet, dass über die Form und Lage der Haltestege 28 dem Strömungsprofil ein Drall überlagerbar ist.

9. Vorrichtung nach Anspruch 7, dadurch gekennzeichnet, dass das Messrohr (12) Teil eines Zentralteils (Z) und jeder Anschlussstutzen (16) Teil eines mit dem Zentralteil zu verbindenden Endstücks (E) ist, wobei die Haltestege (28) auf einen äusseren Ring (35) führen.

10. Vorrichtung nach Anspruch 9, dadurch gekennzeichnet, dass das Zentralteil (Z) mit den Endteilen (E) verklebt, verschweisst oder verschraubt ist.

11. Vorrichtung nach Anspruch 9 oder 10, dadurch gekennzeichnet, dass Anschlussleitungen (32) zu den Ultraschallwandlern (26) in die Haltestege (28) integriert und an der Verbindungsstelle von Zentral- und Endteilen nach aussen geführt sind.
